# EUROPÄISCHE PATENTSCHRIFT

(11) **EP 2 959 758 B1**
(45) Veröffentlichungstag und Bekanntmachung des Hinweises auf die Patenterteilung: **20.03.2019**
(21) Anmeldenummer: 15401054.0
(22) Anmeldetag: 01.06.2015
(51) Int. Cl.: A01B 35/22

(54) **SCHNELLWECHSELBODENBEARBEITUNGSVORRICHTUNG**
FAST CHANGE SOIL PROCESSING DEVICE
DISPOSITIF DE TRAITEMENT DE SOL A CHANGEMENT RAPIDE

(30) Priorität: 24.06.2014 DE 102014108773
(43) Veröffentlichungstag der Anmeldung: 30.12.2015
(73) Patentinhaber: Amazonen-Werke H. Dreyer GmbH & Co. KG, 49205 Hasbergen (DE)
(72) Erfinder: Scherf, Silvio, 39444 Hecklingen OT Cochstedt (DE); Polster, Joachim, 04229 Leipzig (DE)

(56) Entgegenhaltungen:
- EP-A1- 1 723 841
- EP-B1- 1 235 476
- DE-A1- 3 628 910
- DE-A1- 10 319 627
- US-A- 5 007 484

## Beschreibung

Die Erfindung betrifft eine Schnellwechselbodenbearbeitungsvorrichtung gemäß des Oberbegriffes des Patentanspruches 1.

Eine derartige Schnellwechselbodenbearbeitungsvorrichtung ist durch die DE 103 19 627 A1 bekannt.

Eine weitere Schnellwechselbodenbearbeitungsvorrichtung ist in der EP 1 235 476 B1 beschrieben. Bei dieser Schnellwechselbodenbearbeitungsvorrichtung ist der Adapter mittels zweier Schrauben an dem als Befestigungsschaft ausgebildeten Scharstiel des Bodenbearbeitungsgerätes befestigt. Dem Adapter ist ein in Richtung des Befestigungsteiles des Bodenbearbeitungswerkzeuges federnd belastetes Sicherungselement zugeordnet. Das federnde Element ist zwischen dem Scharstiel und dem einen Ende des Sicherungselementes, welches dem Befestigungsteil abgewandt ist, in einer Aushöhlung des Adapters angeordnet. Das eine Ende des Sicherungselementes gereift in eine Aussparung des Befestigungsteiles des Bodenbearbeitungswerkzeuges ein und sichert das Werkzeug auf dem Adapter. Mittels eines Spezialwerkzeuges lässt sich das Sicherungselement aus der Aussparung des Befestigungsteiles zurück drücken, wenn das Bodenbearbeitungswerkzeug ausgewechselt werden muss. Das Zurückdrücken des Sicherungselementes mit dem Spezialwerkzeug ist relativ aufwändig.

Durch die US 5 007 484 ist eine weitere Schnellwechselbodenbearbeitungsvorrichtung bekannt. Bei dieser Schnellwechselbodenbearbeitungsvorrichtung ist bei dem Befestigungsteil des Bodenbearbeitungswerkzeuges auf der dem Adapter (54) zugewandten Seite eine Aussparung angebracht.

Weiter ist hier einem der Befestigungselemente zur Befestigung des Adapters an dem Befestigungsschaft ein Sicherungselement, welches in seiner Sicherungsposition für das Bodenbearbeitungswerkzeug auf dem Adapter (54) in die Aussparung (56) eingreift, zugeordnet.

Der Erfindung liegt die Aufgabe zu Grunde, eine vereinfachte Ausgestaltung des Sicherungselementes und ein vereinfachtes auswechseln des Bodenbearbeitungswerkzeuges zu schaffen.

Diese Aufgabe wird erfindungsgemäß durch die Merkmale des Kennzeichens des Anspruches 1 gelöst. Infolge dieser Maßnahme wird eine vereinfachte Ausgestaltung des Sicherungselementes erreicht, indem dieses direkt dem Befestigungselement zur Befestigung des Adapters zugeordnet wird. Das Sicherungselement wird also zum Bestandteil des Befestigungselementes zur Befestigung des Adapters an dem Befestigungsschaft bzw. an diesem angeordnet. Somit ist das Sicherungselement in der Längsbohrung der Hohlschraube angeordnet und kann, wenn das Werkzeug ausgewechselt werden muss, einfach aus der Hohlbohrung entsprechend zurückgezogen werden.

Weiterhin wird das Sicherungselement durch die Feldanordnung in seiner Sicherungsposition gehalten.

Eine einfache Befestigung des Adapters an dem Befestigungsschaft ergibt sich dadurch, dass die Befestigungselemente zur Befestigung des Adapters an dem Befestigungsschaft als Schraubenelemente ausgebildet sind.

In einer Ausgestaltung der Erfindung ist vorgesehen, dass das Schraubenelement mit dem zugeordneten Sicherungselement in Sicherungsposition des Sicherungselementes über die Oberfläche des Adapters auf der dem Befestigungsteil des Bodenbearbeitungswerkzeuges zugewandten Seite hinausragt und in eine auf der dem Adapter zugewandten Seite des Befestigungsteils angebrachte Aussparung hineingreift. Ein derartiges Sicherungselement ist sehr einfach ausgestaltet, da es von dem Schraubenende, welches über die Oberfläche des Adapters hinausragt, gebildet wird.

In einer anderen Ausführung ist zur Sicherung des Sicherungselementes in der Sicherungsposition vorgesehen, dass das Sicherungselement mittels einer Sicherungsvorrichtung in seiner Sicherungsposition an dem Befestigungsschaft gesichert angeordnet ist.

Weitere Einzelheiten der Erfindung sind der Beispielsbeschreibung zu entnehmen.

Die Zeichnungen 1-5 sind nicht Gegenstand der Erfindung.

Die Zeichnungen zeigen
- Fig.1: an einem Befestigungsschaft angeordnetes Bodenbearbeitungswerkzeug mit einer Schnellwechselbodenbearbeitungsvorrichtung in perspektivischer Darstellung,
- Fig.2: das Bodenbearbeitungswerkzeug gemäß Fig. 1 mit der Schnellwechselbodenbearbeitungsvorrichtung in der Ansicht von hinten,
- Fig.3: das Bodenbearbeitungswerkzeug gemäß Fig. 1 mit der Schnellwechselbodenbearbeitungsvorrichtung in der Ansicht III-III,
- Fig.4: den Adapter- und Befestigungsbereich des Werkzeuges auf dem Adapter mit dem sich in Sicherungsposition befindlichen Sicherungselement in der Darstellung gemäß Fig. 3, jedoch im vergrößerten Maßstab,
- Fig.5: den Adapter- und Befestigungsbereich des Werkzeuges auf dem Adapter mit dem sich aus der Sicherungsposition herausgebrachten Sicherungselement in der Darstellung gemäß Fig. 4,
- Fig.6: das Bodenbearbeitungswerkzeug gemäß Fig. 1 mit der Schnellwechselbodenbearbeitungsvorrichtung, jedoch mit einem anders ausgestalteten Sicherungselement in der Ansicht von hinten,
- Fig.7: das Bodenbearbeitungswerkzeug gemäß Fig. 6 mit der Schnellwechselbodenbearbeitungsvorrichtung in der Ansicht VII-VII,
- Fig.8: den Adapter- und Befestigungsbereich des Werkzeuges auf dem Adapter mit dem sich in Sicherungsposition befindlichen Sicherungselement in der Darstellung gemäß Fig. 7, jedoch im vergrößerten Maßstab,
- Fig.9: den Adapter- und Befestigungsbereich des Werkzeuges auf dem Adapter mit dem sich aus der Sicherungsposition herausgebrachten Sicherungselement in der Darstellung gemäß Fig. 8,
- Fig.10: das Bodenbearbeitungswerkzeug gemäß Fig. 1 mit der Schnellwechselbodenbearbeitungsvorrichtung, jedoch mit einem anders ausgestalteten Sicherungselement in der Ansicht von hinten,
- Fig.11: das Bodenbearbeitungswerkzeug gemäß Fig. 10 mit der Schnellwechselbodenbearbeitungsvorrichtung in der Ansicht XI-XI,
- Fig.12: den Adapter- und Befestigungsbereich des Werkzeuges auf dem Adapter mit dem sich in Sicherungsposition befindlichen Sicherungselement in der Darstellung gemäß Fig. 11, jedoch im vergrößerten Maßstab und
- Fig.13: den Adapter- und Befestigungsbereich des Werkzeuges auf dem Adapter mit dem sich aus der Sicherungsposition herausgebrachten Sicherungselement in der Darstellung gemäß Fig. 12

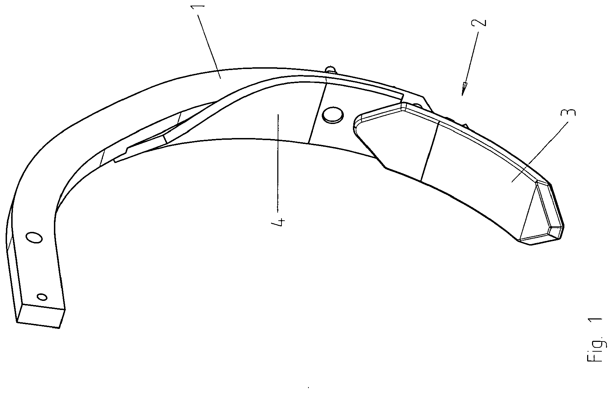

Die Fig. 1 zeigt einen Befestigungsschaft 1 mit an seinem unteren Ende 2 befestigten Bodenbearbeitungswerkzeug 3 und zugeordneten Bodenleitblech 4. Der Befestigungsschaft 1 ist in bekannter Weise an dem nicht dargestellten Rahmen eines landwirtschaftlichen Bodenbearbeitungsgerätes angeordnet. An diesem Rahmen sind jeweils über einen Befestigungsschaft eine Vielzahl von Bodenbearbeitungswerkzeugen 3 in bekannter Weise beabstandet zueinander angeordnet.

In nachbeschriebener Weise ist das jeweilige Bodenbearbeitungswerkzeug 3 mittels einer Schnellwechselbodenbearbeitungsvorrichtung 5 an dem Befestigungsschaft 1 angeordnet. Die Schnellwechselbodenbearbeitungsvorrichtung 5 weist einen Adapter 6 auf, an dem das Bodenbearbeitungswerkzeug 3 mittels eines ihm zugeordneten Befestigungsteiles 7 an dem Befestigungsschaft 1 zu befestigen ist.

Der Adapter 6 ist mittels den beiden als Schrauben ausgebildeten Befestigungselemente den 8 und 9 an dem Befestigungsschaft 1 angeschraubt. Der Adapter 6 weist einen so gestalteten Querschnitt auf, dass er mit dem Befestigungsteil 7 des Bodenbearbeitungswerkzeuges 3 passend in Eingriff zu bringen ist, wie die zeichnerischen Darstellung zeigen. Die unteren Schraube 8 ist als Senkkopfschraube ausgebildet. Die Mutter 10 dieser Schraube 8 ist auf der Rückseite 11 des Befestigungsschaftes 1 angeordnet. Die Schraube 9 ist in eine in dem Adapter 6 angeordnete Gewindebohrung 12 eingeschraubt.

Auf der dem Adapter 6 im Bereich des Endes 13 der Schraube 9 ist in dem Befestigungsteil 7 die Aussparung 14 angebracht. Das als Sicherungselement 15 ausgebildete Ende 13 der Schraube 9 weist eine derartige Länge auf, dass sie auf der dem Befestigungsteil 7 des Bodenbearbeitungswerkzeuges 3 zugewandten Seite hinausragt, wenn über diese Schraube 9 der Adapter 6 fest an dem Befestigungsschaft 1 anliegt und entsprechend fest angeschraubt ist. Wenn die Schraube 9 sich in dieser zuletzt erwähnten Position befindet, ragt das Ende 13 der Schraube 9 in die Aussparung 14 des Befestigungsteiles 7 des Bodenbearbeitungswerkzeuges 3 hinein. In dieser Position bildet das Ende 13 der Schraube 9 das Sicherungselement 15, damit das Bodenbearbeitungswerkzeug 3 nicht von dem Adapter 6 abfallen kann. Somit ist einem der als Schrauben 8, 9 ausgebildeten Befestigungselemente zur Befestigung des Adapters 6 an dem Befestigungsschaft 1 das Sicherungselement 15 geordnet. Nach dem Zurückdrehen der Schraube 9 kann das Bodenbearbeitungswerkzeug 3 von dem Adapter 65 aufgrund der entsprechend ausgestalteten Schnellwechselbodenbearbeitungsvorrichtung abgenommen werden.

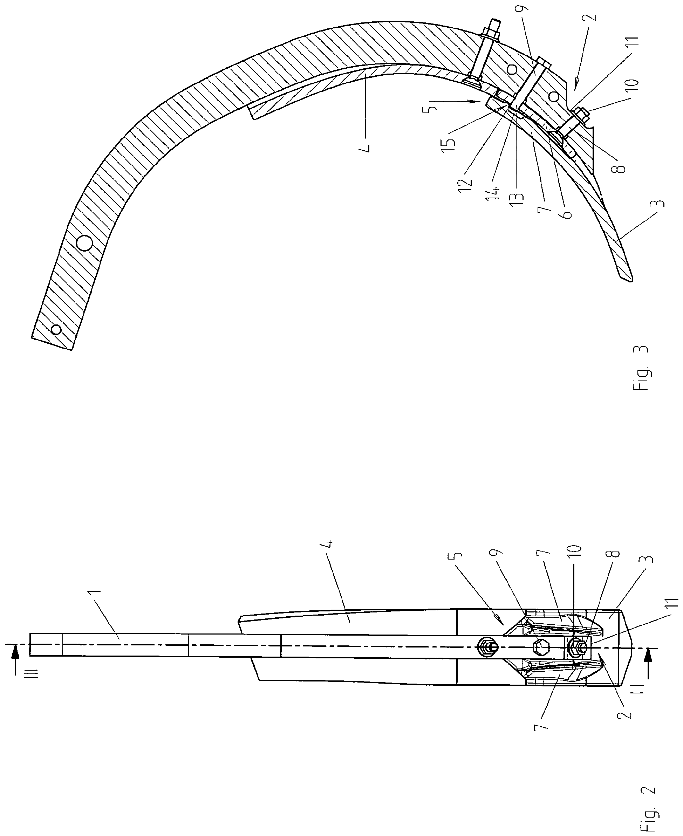

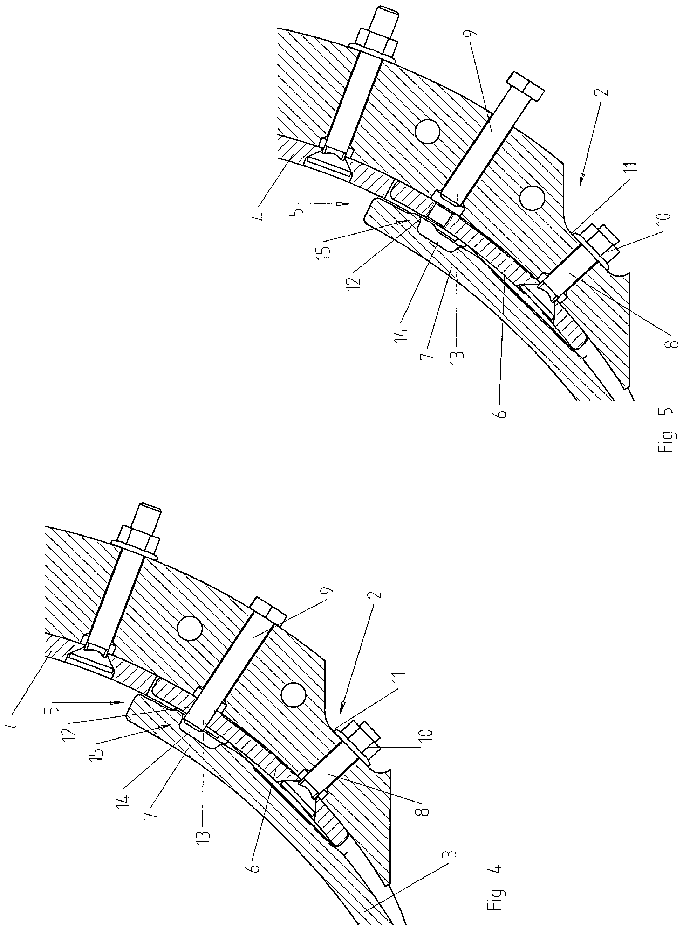

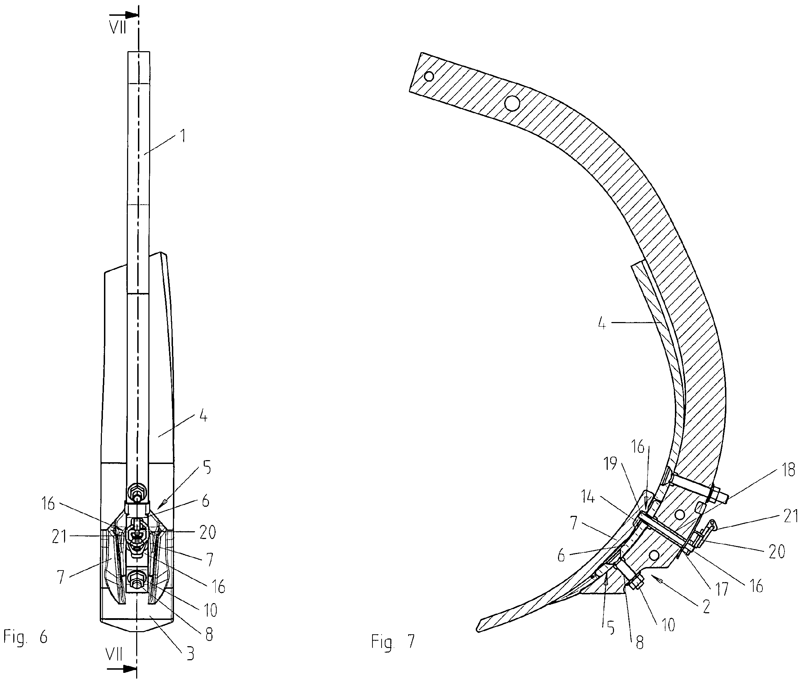

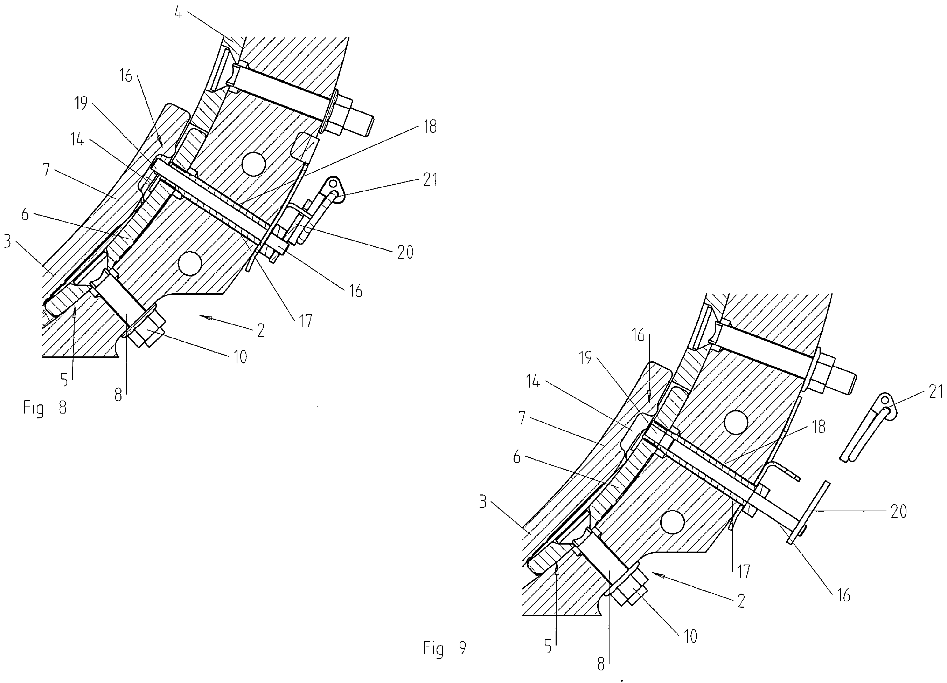

Das Ausführungsbeispiel der Schnellwechselbodenbearbeitungsvorrichtung gemäß den Fig. 6 bis 9 unterscheidet sich von dem vorhergehenden Ausführungsbeispiel durch eine andere Ausgestaltung des Sicherungselementes 16 von der Ausführung gemäß den Fig. 2 bis 5. Das Sicherungselement 16 ist der zweiten Schraube 17 zur Befestigung des Adapters 6 an dem Befestigungsschaft 1 zugeordnet. Hierzu ist die Schraube 17 als Hohlschraube ausgebildet und weist die in Längsrichtung der Schraube 17 verlaufende Längsbohrung 18 auf. In diese Längsbohrung 18 der Hohlschraube 17 ist das stiftförmig ausgebildete Sicherungselement 16 hineingesteckt und weist eine derartige Länge auf, dass es Mitte seinem Ende 19 in die auf der dem Adapter 6 zugewandten Seite des Befestigungsteiles 7 des Bodenbearbeitungswerkzeuges 3 angebrachte Aussparung 14 hineingreifend ausgestaltet ist, wie die Zeichnungen zeigen. Damit dieses stiftförmige Sicherungselement 16 in seiner Sicherungsposition nicht aus der Längsbohrung 18 der Hohlschraube 17 herausfallen kann, ist an dem hinteren Ende des stiftförmigen Elementes 16 eine Sicherungsplatte 20 angebracht, die mit einem an dem Befestigungsschaft 1 zusammenwirkenden, als Splint 21 ausgebildeten Sicherungsvorrichtung gesichert. Nach Entfernen des Splintes 21 und dem Zurückziehen des stiftförmigen Elementes 16 kann das Bodenbearbeitungswerkzeug 3 von dem Adapter 6 aufgrund der entsprechend ausgestalteten Schnellwechselbodenbearbeitungsvorrichtung 5 abgenommen werden.

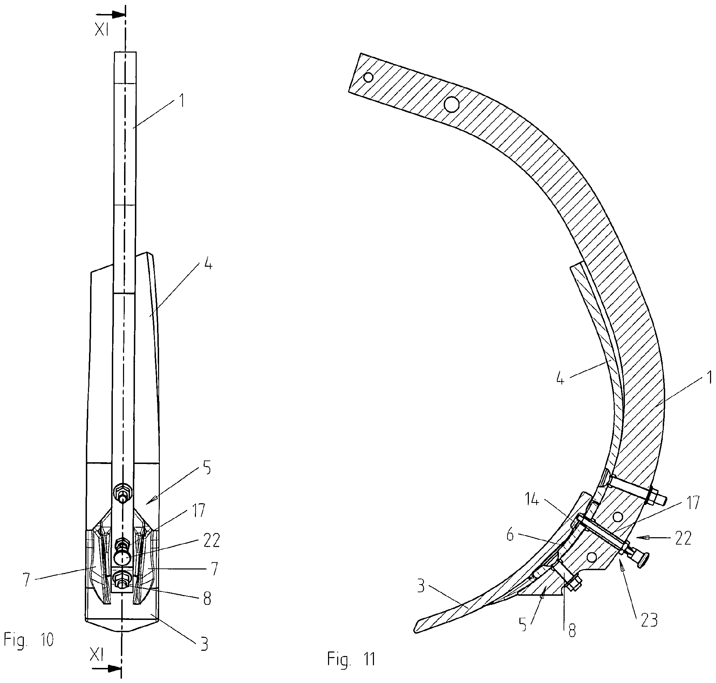

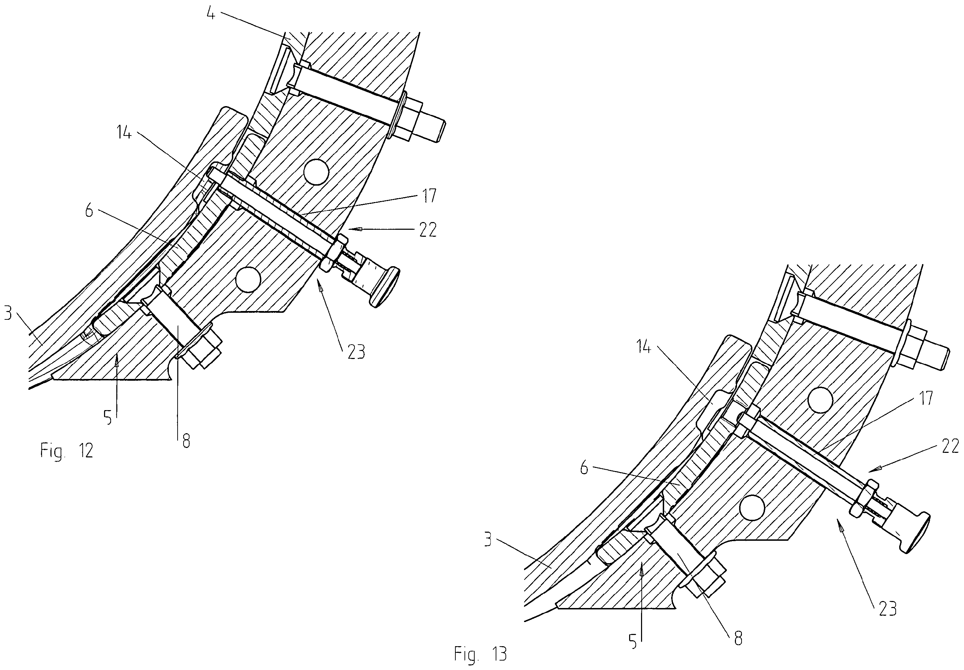

Das Ausführungsbeispiel der Schnellwechselbodenbearbeitungsvorrichtung 5 gemäß den Fig. 10 bis 13 unterscheidet sich von dem vorhergehenden Ausführungsbeispiel durch eine andere Ausgestaltung des Sicherungselementes 22 von der Ausführung gemäß den Fig. 6 bis 9. Dieses Sicherungselement 22 ist ebenfalls stiftförmig ausgestaltet und wird mittels eines Federelementes 23, welches zwischen dem stiftförmigen Element 22 und der Hohlschraube 17 angeordnet ist, in seine Sicherungsposition gedrückt. Nach dem Zurückziehen des stiftförmigen Elementes 22 gegen das Federelement 23 kann das Bodenbearbeitungswerkzeug von dem Adapter 6 aufgrund der entsprechend ausgestalteten Schnellwechselbodenbearbeitungsvorrichtung 5 abgenommen werden.

## Patentansprüche

1. Schnellwechselbodenbearbeitungsvorrichtung, die zur Verwendung mit einem landwirtschaftlichen Bodenbearbeitungsgerät ausgebildet ist, wobei die Vorrichtung einen Adapter und ein Bodenbearbeitungswerkzeug aufweist, wobei der Adapter so ausgestaltet ist, dass er im Betrieb mittels mehrerer Befestigungselemente an einem Befestigungsschaft an dem Gerät befestigt ist, wobei der Adapter einen so ausgestalteten Querschnitt aufweist, dass er mit dem Befestigungsteil des Bodenbearbeitungswerkzeuges passend in Eingriff zu bringen ist, wobei dem Adapter zumindest ein das Bodenbearbeitungswerkzeug auf dem Adapter in Arbeitsposition des Werkzeuges sicherndes Sicherungselement zugeordnet ist, wobei in dem
Befestigungsteil (7) des Bodenbearbeitungswerkzeuges (3) auf dem Adapter (6) zugewandten Seite eine Aussparung (14) angebracht ist, wobei einem der Befestigungselemente (9,17) zur Befestigung des Adapters (6) an dem Befestigungsschaft (1) das Sicherungselement (13, 15,16, 19,22) welches in seiner Sicherungsposition für das Bodenbearbeitungswerkzeug (3) auf dem Adapter (6) in die Aussparung (14) eingreift, zugeordnet ist, **dadurch gekennzeichnet, dass** das Schraubenelement (17) mit dem zugeordneten Sicherungselement (16) als eine in Längsrichtung der Schraube (17) verlaufende Längsbohrung (18) aufweisende Hohlschraube (17) ausgebildet ist, dass in dieser Längsbohrung (18) der Hohlschraube (17) das Sicherungselement (15, 19,22), welches stiftförmig ausgebildet ist, bis in eine auf der dem Adapter (6) zugewandten Seite des Befestigungsteil (7) des Bodenbearbeitungswerkzeuges (3) angebrachte Aussparung (14) hineingreifend angeordnet ist, dass das Sicherungselement (22) mittels einer Federanordnung (23) in Richtung der Sicherungsposition federbelastet in der Längsbohrung (18) der Hohlschraube (17) angeordnet ist.

2. Schnellwechselbodenbearbeitungsvorrichtung nach Anspruch 1, **dadurch gekennzeichnet, dass** die Befestigungselemente (8, 9,17) zur Befestigung des Adapters (6) an dem Befestigungsschaft (1) als Schraubenelemente ausgebildet sind.

3. Schnellwechselbodenbearbeitungsvorrichtung nach zumindest einem der vorstehenden Ansprüche, **dadurch gekennzeichnet, dass** das Schraubenelement (9) mit dem zugeordneten Sicherungselement (13,15) in Sicherungsposition des Sicherungselementes (13,15) über die Oberfläche des Adapters (6) auf der dem Befestigungsteil (7) des Bodenbearbeitungswerkzeuges (3) zugewandten Seite hinausragt und in eine auf der dem Adapter (6) zugewandten Seite des Befestigungsteils (7) angebrachte Aussparung (14) hineingreift.

4. Schnellwechselbodenbearbeitungsvorrichtung nach Anspruch 1, **dadurch gekennzeichnet, dass** das Sicherungselement (22) mittels einer Sicherungsvorrichtung (21) in seiner Sicherungsposition an dem Befestigungsschaft (1) gesichert angeordnet ist.

## Claims

1. Quick-change soil cultivation device which is designed to be used with an agricultural soil cultivation implement, wherein the device has an adapter and a soil cultivation tool, wherein the adapter is configured such that, during operation, it is fastened to a fastening shaft on the implement by means of several fastening elements, wherein the adapter has a cross section configured such that it is able to be brought into matching engagement with the fastening part of the soil cultivation tool, wherein the adapter is assigned at least one securing element that secures the soil cultivation tool to the adapter in the working position of the tool, wherein a cutout (14) has been introduced into the fastening part (7) of the soil cultivation tool (3) on the side facing the adapter (6), wherein one of the fastening elements (9, 17) for fastening the adapter (6) to the fastening shaft (1) is assigned the securing element (13, 15, 16, 19, 22), which engages in the cutout (14) in its securing position for the soil cultivation tool (3) on the adapter (6), **characterized in that** the screw element (17) with the associated securing element (16) is configured as a hollow screw (17) having a longitudinal bore (18) extending in the longitudinal direction of the screw (17), **in that** the securing element (15, 19, 22), which is in the form of a pin, is arranged in this longitudinal bore (18) of the hollow screw (17) so as to engage in a cutout (14) made on that side of the fastening part (7) of the soil cultivation tool (3) that faces the adapter (6), **in that** the securing element (22) is arranged in the longitudinal bore (18) of the hollow screw (17) in a manner spring-loaded in the direction of the securing position by means of a spring arrangement (23).

2. Quick-change soil cultivation device according to Claim 1, **characterized in that** the fastening elements (8, 9, 17) for fastening the adapter (6) to the fastening shaft (1) are configured as screw elements.

3. Quick-change soil cultivation device according to at least one of the preceding claims, **characterized in that** the screw element (9) with the associated securing element (13, 15) projects, in the securing position of the securing element (13, 15), beyond the surface of the adapter (6) on the side that faces the fastening part (7) of the soil cultivation tool (3) and engages in a cutout (14) made on that side of the fastening part (7) that faces the adapter (6).

4. Quick-change soil cultivation device according to Claim 1, **characterized in that** the securing element (22) is arranged in a manner secured in its securing position on the fastening shaft (1) by means of a securing device (21).

## Revendications

1. Dispositif de traitement du sol à changement rapide, qui est destiné à être utilisé avec un appareil agricole de traitement du sol, dans lequel le dispositif présente un adaptateur et un outil de traitement du sol, dans lequel l'adaptateur est configuré de telle manière qu'il soit, en fonctionnement, fixé au moyen de plusieurs éléments de fixation à un arbre de fixation sur l'appareil, dans lequel l'adaptateur présente une section transversale configurée de telle manière qu'il doive être placé en engagement avec ajustement avec la partie de fixation de l'outil de traitement du sol, dans lequel au moins un élément de calage calant l'outil de travail du sol sur l'adaptateur dans la position de travail de l'outil est associé à l'adaptateur, dans lequel un évidement (14) est pratiqué dans la partie de fixation (7) de l'outil de traitement du sol (3) sur le côté tourné vers l'adaptateur (6), dans lequel l'élément de calage (13, 15, 16, 19, 22), qui s'engage dans l'évidement (14) dans sa position de calage pour l'outil de traitement du sol (3) sur l'adaptateur (6), est associé à un des éléments de fixation (9, 17) pour la fixation de l'adaptateur (6) à l'arbre de fixation (1), **caractérisé en ce que** l'élément de vis (17) avec l'élément de calage associé (16) est réalisé sous la forme d'une vis creuse (17) présentant un perçage longitudinal (18) s'étendant dans la direction longitudinale de la vis (17), **en ce que** l'élément de calage (15, 19, 22) qui est réalisé en forme de tige est disposé dans ce perçage longitudinal (18) de la vis creuse (17) en s'engageant jusque dans un évidement (14) pratiqué sur le côté de la partie de fixation (7) de l'outil de travail du sol (3) tourné vers l'adaptateur (6), **en ce que** l'élément de calage (22) est disposé dans le perçage longitudinal (18) de la vis creuse (17) en étant chargé élastiquement par un système de ressort (23) en direction de la position de calage.

2. Dispositif de traitement du sol à changement rapide selon la revendication 1, **caractérisé en ce que** les éléments de fixation (8, 9, 17) sont réalisés pour la fixation de l'adaptateur (6) à l'arbre de fixation (1) sous forme d'éléments de vis.

3. Dispositif de traitement du sol à changement rapide selon au moins une des revendications précédentes, **caractérisé en ce que** l'élément de vis (9) s'engage avec l'élément de calage associé (13, 15), dans la position de calage de l'élément de calage (13, 15), au-delà de la surface de l'adaptateur (6) sur le côté tourné vers la partie de fixation (7) de l'outil de travail du sol (3) et pénètre dans un évidement (14) pratiqué sur le côté de la partie de fixation (7) tourné vers l'adaptateur (6).

4. Dispositif de traitement du sol à changement rapide selon la revendication 1, **caractérisé en ce que** l'élément de calage (22) est disposé de façon calée au moyen d'un dispositif de calage (21) dans sa position de calage sur l'arbre de fixation (1).
